Europäisches Patentamt

European Patent Office

Office européen des brevets

(19)

(11) EP 0 504 001 B1

(12) **FASCICULE DE BREVET EUROPEEN**

(45) Date de publication et mention
de la délivrance du brevet:
**11.12.1996 Bulletin 1996/50**

(51) Int Cl.$^6$: **H04N 5/262**

(21) Numéro de dépôt: **92400543.2**

(22) Date de dépôt: **03.03.1992**

(54) **Générateur digital d'une bordure autour d'un sujet incrusté sur un fond**

Digitaler Generator eines Randes um ein einem Hintergrund überlagertes Objekt

Digital generator of a border around an object superimposed on a background

(84) Etats contractants désignés:
**DE FR GB**

(30) Priorité: **08.03.1991 FR 9102823**

(43) Date de publication de la demande:
**16.09.1992 Bulletin 1992/38**

(73) Titulaire: **THOMSON BROADCAST
95800 Cergy-Saint-Christophe (FR)**

(72) Inventeurs:
• **Guede, Catherine
F-92045 Paris la Défense (FR)**
• **Grimaldi, Jean-Luc
F-92045 Paris la Défense (FR)**

(74) Mandataire: **Ruellan-Lemonnier, Brigitte et al
THOMSON Multimedia,
9 Place des Vosges
La Défense 5
92050 Paris La Défense (FR)**

(56) Documents cités:
**US-A- 4 646 154**

• **PATENT ABSTRACTS OF JAPAN, vol. 9, no. 327
(P-415)[2050], 21 décembre 1985; & JP-A-60 151
787**
• **PATENT ASTRACTS OF JAPAN, vol. 9, no. 214
(P-384)[1937], 31 août 1985; & JP-A-60 073 788**
• **IEEE TRANSACTIONS ON COMPUTERS, vol. 24,
no. 10, octobre 1975, pages 983-988; A.K.
AGRAWALA: "On generating a line "Parallel" to
a digital line - a sequential approach"**

## Description

L'invention se rapporte au traitement numérique d'images et concerne une méthode et un dispositif permettant la création d'une bordure autour d'un sujet incrusté sur un fond, notamment en vidéo numérique ; l'invention concerne également un générateur d'effets spéciaux comportant un tel dispositif.

Le signal vidéo V, obtenu à la sortie d'un circuit mélangeur et correspondant à l'incrustation d'un sujet sur un fond, est de la forme

$$V = aS + (1-a)F \qquad \text{avec } 0<a<1$$

où S est le signal vidéo du sujet avant incrustation, F le signal vidéo du fond avant incrustation et a un signal appelé signal de découpe du sujet ou signal de clé (key signal dans la littérature anglo-saxonne) du sujet.

Pour rendre le sujet plus visible sur le fond, une bordure colorée peut être ajoutée autour du sujet. Pour obtenir cette bordure, il est possible de procéder d'abord à une incrustation sur le fond, selon un signal ou clé de découpe de bordure b ; qui correspond au signal a de découpe du sujet dilaté dans toutes les directions ; cette première incrustation est donnée par un signal vidéo

$$b.B + (1-b)F \qquad \text{avec } 0<b<1$$

où B est le signal vidéo de la couleur de bordure ;

puis le sujet est incrusté sur le résultat, selon le signal, a, de découpe du sujet ; cette seconde incrustation est donnée par le signal vidéo

$$V_b = a.S + (1-a)[b.B + (1-b)F].$$

Ou bien le sujet peut être d'abord incrusté sur le fond, par le signal vidéo

$$V = a.S + (1-a)F$$

puis seul le contour, appelé outline dans la littérature anglo-saxonne, est incrusté sur le résultat, selon la clé, c, de découpe de contour ; cette incrustation est donnée par le signal vidéo

$$V'_b = c.B + (1-c)[a.S+(1-a)F],$$

et il est à noter que $V_b'$ correspond à $V_b$ aux effets de bord près et que c est égal à b-a.

Cet effet d'incrustation de contour permet également d'incruster le contour sur le fond, sans le sujet.

Pour créer une bordure(to border dans la littérature anglo-saxonne) il est connu de déterminer le signal de découpe de bordure, b, en comparant, pour tout point i,j de l'écran, le signal de découpe du sujet correspondant à ce point et les signaux de découpe du sujet des points de la même colonne j décalés de 1 à n lignes, puis en comparant entre eux les signaux de clé des points correspondants décalés de 1 à m points. Pour obtenir une bordure extérieure au sujet et s'appuyant sur ses bords, il suffit alors, dans les n+1 comparaisons ainsi effectuées, de ne garder que la valeur maximale puis de comparer entre elles ces valeurs maximales et de n'en garder que la valeur maximale ; cette dernière valeur maximale constitue alors le signal de découpe de bordure affecté au point de l'écran dont les coordonnées sont i-n/2, j-m/2, avec m et n pairs. Une telle méthode est décrite dans US-A-4 645 154.

Cette méthode connue peut être résumée en disant que, pour obtenir une bordure de n/2 lignes et m/2 points autour du sujet, il est effectué, dans une fenêtre d'analyse rectangulaire de (m+1) x (n + 1) points du signal de découpe sujet, une recherche d'une valeur maximale et que cette valeur maximale constitue le signal de découpe de bordure pour le point situé au centre de la fenêtre.

Mais cette méthode connue présente des inconvénients :

- lorsque le sujet présente des coins à angles aigus, les angles correspondants de la bordure sont tronqués horizontalement et /ou verticalement
- la bordure n'est pas isotrope car les bords purement verticaux ou horizontaux sont moins étendus que les autres et ainsi, lorsque la fenêtre est carrée, un bord incliné à 45 degrés est racine de deux, soit environ 1,4, fois plus étendu qu'un bord vertical ou horizontal ; ainsi une bordure autour d'un sujet circulaire tend à avoir une forme carrée et, plus la bordure est grande par rapport au sujet, plus cela se voit.

La présente invention a pour but d'éviter ou, pour le moins, de réduire ces inconvénients.

Ceci est obtenu en effectuant une recherche de la valeur maximale, non pas en deux étapes successives, mais en comparant entre elles simultanément toutes les valeurs des signaux de découpe du sujet des points de la fenêtre d'analyse, ce qui permet de choisir la forme de cette fenêtre afin de garantir une bonne isotropie et, en particulier, de la prendre circulaire lorsque la répartition horizontale et verticale des points de l'image est identique.

La présente invention a pour objets une méthode et un dispositif tels que respectivement définis dans les revendications 1 et 4.

La présente invention sera mieux comprise et d'autres caractéristiques apparaîtront à l'aide de la description ci-après et des figures s'y rapportant qui représentent :

- la figure 1, un dispositif selon l'art connu, pour border un sujet incrusté sur un fond,
- la figure 2, un dispositif selon l'invention, pour border un sujet incrusté sur un fond.

Sur les figures les éléments correspondants portent les mêmes référence.

Dans les différents schémas les dispositifs de synchronisation précise, relevant de la technologie courante, n'ont pas été représentés en vue de rendre les dessins plus clairs et de simplifier l'exposé.

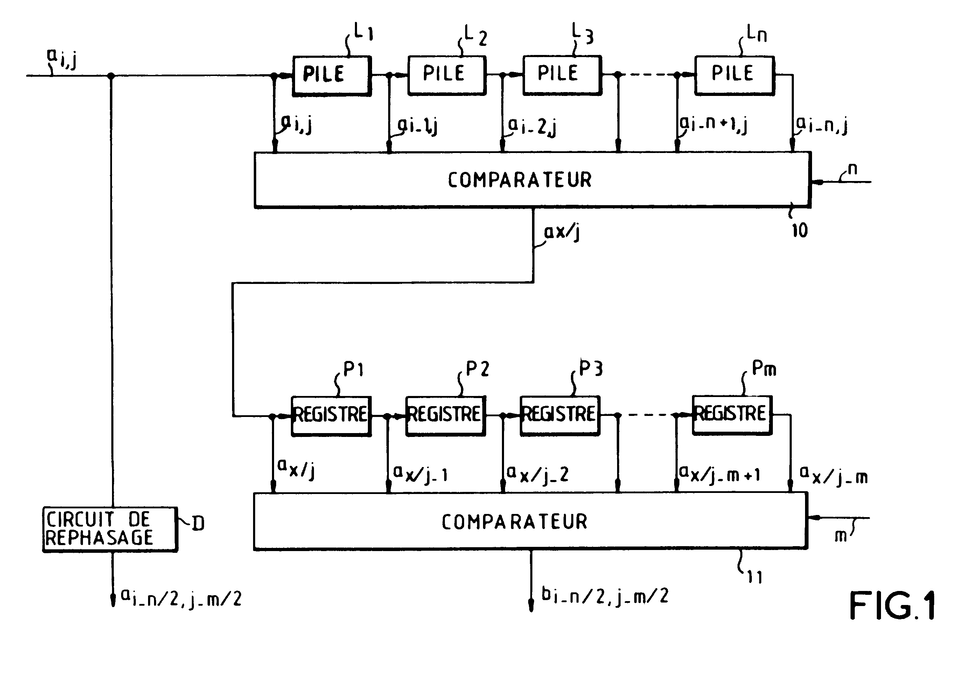

La figure 1 est le schéma d'un dispositif pour créer une bordure autour d'un sujet incrusté sur un fond. Ce dispositif connu permet la mise en oeuvre de la méthode connue, dont il a été question plus avant, pour créer une bordure autour d'un sujet incrusté sur un fond.

Le dispositif selon la figure 1 comporte une entrée de signal sur laquelle sont appliqués successivement et sous forme numérique les signaux de découpe du sujet correspondant à un sujet incrusté sur un fond. A l'instant considéré l'entrée de signal reçoit le signal $a_{i,j}$ c'est-à-dire le signal de découpe sujet au point i, j de l' écran situé à l'intersection de la ligne i avec la colonne j.

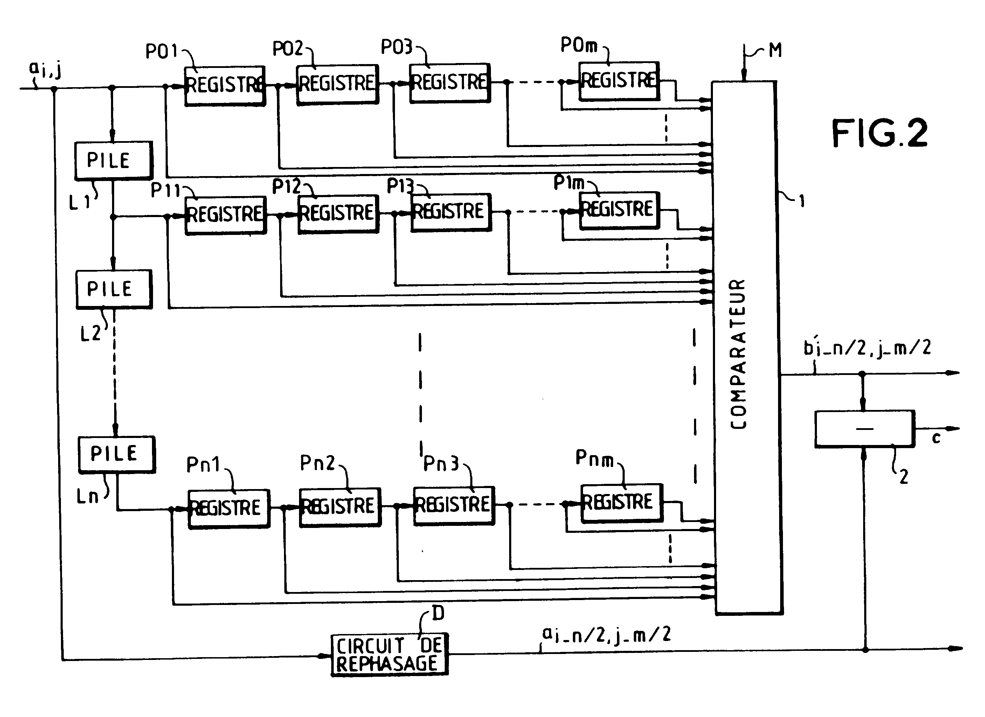

Il est à noter que, sur la figure 1, comme d'ailleurs sur la figure 2, du fait que les signaux à transmettre sont des signaux à plusieurs bits en parallèle, les liaisons sont des liaisons multifilaires bien qu'elles soient représentées chacune par un simple trait pour simplifier le dessin.

L'entrée de signal est reliée à l'entrée du premier circuit à retard L1 d'un groupe de n circuits à retard L1 à Ln montés en série. Ces circuits à retard sont constitués chacun par une pile de registres de type FIFO (de l'anglais First In First Out, c'est-à-dire premier entré premier sorti) et déterminent chacun un retard égal à la durée d'une ligne de balayage sur l'écran si bien que, lorsque le circuit L1 reçoit le signal $a_{i,j}$ , le circuit L3, par exemple, reçoit le signal $a_{i-2,j}$ et le circuit Ln délivre le signal $a_{i-n,j}$.

Un comparateur 10 reçoit les n + 1 signaux fournis, au même moment, par l'entrée de signal et par les sorties des n circuits à retard L1 à Ln ; ce comparateur, qui comporte généralement plus que les n + 1 entrées de signal utilisées, comporte aussi une entrée de commande pour inhiber ses entrées non utilisées. Ce comparateur compare entre eux les signaux

$$a_{i,j} \qquad a_{i-1,j} \qquad a_{i-2,j} \cdots\cdots a_{i-n,j}$$

et détermine celui dont la valeur est maximale, pour le délivrer sur une sortie ; ce signal maximal est noté $a_{x/j}$. La sortie du comparateur 10 est reliée à l'entrée du premier circuit à retard P1 d'un groupe de m circuits à retard P1 à Pm montés en série. Ces circuits à retard sont constitués chacun par un registre et déterminent chacun un retard égal à la durée entre deux points successifs d'une ligne, lors du balayage de cette ligne. Ainsi, lorsque le circuit P1 reçoit le signal $a_{x/j}$ relatif à la colonne j, le circuit P3, par exemple, délivre le signal correspondant $a_{x/j-3}$ relatif à la colonne j-3 et le circuit Pm délivre le signal $a_{x/j-m}$.

Un comparateur 11, semblable au comparateur 10, reçoit les m+1 signaux fournis, au même moment, par la sortie du comparateur 10 et par les sorties des m circuits à retard P1 à Pm ; dans ce comparateur, aussi, une entrée de commande permet d'inhiber les entrées de signal non utilisées. Le comparateur 11 compare entre eux les signaux

$$a_{x/j} \qquad a_{x/j-1} \qquad a_{x/j-2} \cdots\cdots a_{x/j-m}$$

et détermine celui dont la valeur est maximale. Ce signal maximal est noté $b_{i-n/2,\, j-m/2}$ , avec m et n pairs.

Le signal $b_{i-n/2,\, j-m/2}$ constitue le signal de découpe de bordure recherché pour le point i-n/2, j-m/2 de l'image.

Un circuit de rephasage, D, comporte, en série, n/ 2 piles de registres identiques aux piles L1 à Ln et m/2 registres identiques aux registres P1 à Pm. Ce circuit de rephasage est destiné à fournir un signal de découpe sujet, a, correspondant au même point de l'image que le signal de découpe de bordure, b, délivré par le comparateur 11 ; il est à noter qu'en fait le circuit de rephasage D comporte de plus, en série avec ses n piles et ses m registres, un circuit à retard constitué de registres et destiné à donner un retard égal à la somme des retards entraînés par le traitement dans les comparateurs 10 et 11 ; mais, sur la figure 1, comme ce sera d'ailleurs le cas sur la figure 2, les comparateurs sont supposés n'introduire aucun retard, compte-tenu des signaux indiqués sur leurs entrées et sur leur sortie.

Le dispositif selon la figure 1 définit, comme il a été indiqué plus avant, une fenêtre d'analyse rectangulaire de (m+1) x (n+1) points dans l'image, décomposée en vertical puis en horizontal afin de permettre de déterminer un signal de découpe de bordure tenant compte des signaux de découpe du sujet de tous les points de la fenêtre ; les inconvénients d'une telle façon de procéder ont été également indiqués plus avant.

La figure 2 est le schéma d'un dispositif selon l'invention pour créer une bordure autour d'un sujet incrusté sur un fond. Ce dispositif comporte une entrée de signal sur laquelle sont appliqués successivement les signaux de découpe du sujet présentés sous forme numérique. A l'instant considéré l'entrée de signal reçoit le signal $a_{i,j}$ c'est-à-dire le signal de découpe du sujet au point i,j de l' image situé à l'intersection de la ligne i avec la colonne j.

Comme dans le cas de la figure 1, l'entrée de signal est reliée à l'entrée du premier circuit à retard L1 d'un groupe de n circuits à retard L1 à Ln montés en série et constitués chacun par une pile de registres de type FIFO qui déterminent chacun un retard égal à la durée d'une ligne de balayage sur l'image.

L'entrée de signal du dispositif est également reliée à une entrée d'un comparateur 1 et à l'entrée du premier registre, PO1, d'un groupe de m registres, PO1 à POm, montés en série et dont les sorties sont reliées chacune à une entrée du comparateur 1, qui leur est propre. Chacun de ces m registres détermine un retard égal à la durée entre deux points successifs d'une ligne, lors du balayage de cette ligne.

De la même façon la sortie de chacune des piles L1 à Ln est reliée à une entrée du comparateur 1 et à l'entrée du premier registre, tel que P11, d'un groupe de m registres, tels que P11 à P1m, montés en série et dont les sorties sont reliées chacune à une entrée du comparateur 1, qui leur est propre.

Ainsi, à un instant donné, le comparateur 1 reçoit, respectivement sur (m+1)x(n+1) de ses entrées, les signaux de découpe du sujet

$$
\begin{array}{llll}
a_{i,j} & a_{i,j-1} & a_{i,j-2} & \cdots\cdots a_{i,j-m} \\
a_{i-1,j} & a_{i-1,j-1} & a_{i-1,j-2} & \cdots\cdots a_{i-1,j-m} \\
a_{i-2,j} & a_{i-2,j-1} & a_{i-2,j-2} & \cdots\cdots a_{i-2,j-m} \\
\hline
a_{i-n,j} & a_{i-n,j-1} & a_{i-n,j-2} & \cdots\cdots a_{i-n,j-m}
\end{array}
$$

c'est-à-dire que le comparateur reçoit l'ensemble des signaux compris dans une fenêtre de recherche rectangulaire relative à (m+1)x(n+1) points de l'image. En réalisant une analyse sur l'ensemble de ces signaux afin de déterminer le signal dont la valeur est maximale, le comparateur fournit exactement le même résultat, à signaux identiques sur l'entrée de signal du dispositif, que le comparateur 11 selon la figure 1 ; le dispositif, selon l'invention, tel que représenté sur la figure 2, ne présenterait pas un grand intérêt par rapport au dispositif représenté sur la figure 1 si l'analyse était effectuée ainsi. Mais en fait le comparateur 1 comporte une entrée, M, de commande d'inhibition de tout ou partie de ses entrées de signaux, ce qui lui permet de ne pas tenir compte d'une partie des signaux reçus à un instant donné ; ainsi en choisissant convenablement les entrées inhibées il est possible de ne retenir dans la fenêtre de recherche que les points d'un disque situé tout entier dans la fenêtre rectangulaire ; ceci revient donc à délimiter, dans la fenêtre de recherche rectangulaire, une fenêtre d'analyse circulaire.

Il est à noter que toute autre forme de fenêtre peut être employée et, en particulier, des fenêtres elliptiques voire même des fenêtres rectangulaires et plus petites que la fenêtre de recherche définie par l'ensemble des signaux reçus par le comparateur 1 ; quelle que soit la forme de la fenêtre d'analyse il est généralement intéressant de la centrer sur le même point i-n/2, j-m/2 que la fenêtre de recherche rectangulaire, relative aux (m+1)x(n+1) points. Le comparateur 1 fournit ainsi un signal de découpe de bordure qui est noté $b'_{i-n/2,\,j-m/2}$ pour le distinguer du signal de découpe de bordure obtenu avec le dispositif selon la figure 1.

Le dispositif selon la figure 2 comporte aussi un circuit de rephasage, D, identique à celui de la figure 1, de manière à fournir, sur sa sortie, un signal de découpe du sujet $a_{i-n/2,j-m/2}$ correspondant au même point de l'écran que le signal de découpe de bordure délivré au même instant par le comparateur 1.

Un circuit soustracteur, 2, permet d'obtenir le signal de découpe de contour, c, relatif au point i-n/2, j-m/2, par soustraction entre le signal du circuit de rephasage D et le signal du comparateur 1.

Le dispositif selon la figure 2 peut être simplifié dans le cas où la fenêtre d'analyse a une forme et des dimensions qui ne varient pas ; dans ce cas les conducteurs, qui aboutissent à des entrées du comparateur 1 dont les signaux sont inhibés, peuvent être supprimés si bien que la fenêtre de recherche et la fenêtre d'analyse sont identiques.

Il a été indiqué dans la description de la figure 2 que le comparateur 1 effectuait une recherche de maximum ; une telle recherche est destinée à dilater un signal de découpe et permet d'obtenir une bordure s'appuyant sur les bords du sujet mais extérieure au sujet. Dans le cas où la bordure recherchée doit être intérieure au sujet c'est une recherche de valeur minimale qui doit être effectuée et, pour incruster, c'est l'ancien signal de découpe du sujet qui devient le signal de découpe de bordure, et c'est le signal calculé par recherche de minimum, qui devient le signal de découpe du sujet. En effet, en raison de cette recherche de minimum, le signal obtenu est plus étroit que le signal de découpe du sujet à partir duquel il est déterminé.

Il est à noter que l'invention peut également servir à déterminer une ombre donnant un effet de relief (drop-shadow dans la littérature anglo-saxonne) pour un sujet incrusté sur un fond ; cette ombre sera appelée ombre de relief dans ce qui suit. Cette ombre est une bordure partielle accolée au sujet et permettant de lui donner un effet de relief comme par éclairage rasant. Selon l'art connu et selon l'invention, pour calculer le signal de découpe d'une ombre portée (cast shadow dans la littérature anglo-saxonne) il suffit de retarder le signal de découpe du sujet d'un certain nombre de lignes et de points. Si ce retard est de k lignes plus q points l'ombre portée est à droite et vers le bas, par contre pour k lignes moins q points elle est à gauche et vers le bas ; pour obtenir une ombre de relief d'une certaine épaisseur, plusieurs ombres portées successives, généralement décalés d'une ligne et de plus ou moins un ou deux points d'un trait au suivant, sont nécessaires et les signaux relatifs à ces traits sont les signaux d'entrée d'un dispositif de recherche de maximum. Le dispositif pour créer une bordure autour d'un sujet, tel que décrit à l'aide de la figure 2 est donc parfaitement adaptable à la réalisation d'une ombre de relief. Pour cela la longueur des retards de ligne doit être programmable ce qui est réalisé en pratiquant, dans la fenêtre de (m+1)x(n+1) points, un masquage qui ne laisse subsister que les valeurs du signal de découpe correspondant à des points décalés, par exemple, de une ligne plus un point, de deux lignes plus deux points, de trois lignes plus trois points et ainsi de suite jusqu'à h lignes et h points ; la valeur maximale, qui est la valeur de signal de découpe de bordure à affecter aux différents points de ces ombres portées est obtenue par le comparateur 1. Si, de plus, un retard de h lignes et h points est appliqué au signal de découpe du sujet, grâce au circuit de rephasage D, l'ombre de relief va se trouver plus haute que le sujet alors que si le retard est nul l'ombre de relief va se trouver plus basse que le sujet.

D'une façon générale pour régler la phase du sujet par rapport à sa bordure il faut plus ou moins retarder le signal de découpe du sujet et donc la vidéo du sujet doit être retardée de façon identique.

Il est à noter que les signaux d'image peuvent provenir de n'importe quelle source ; si, au départ de la source, ils ne sont pas numériques, une conversion en numérique est effectuée ; et ainsi, à partir par exemple d'une image sur papier, sur pellicule, sur bande magnétique, etc., il est possible de fournir les signaux correspondant à cette image traitée pour comporter une bordure.

La présente invention trouve son application dans la réalisation d'effets spéciaux, en particulier en télévision.

**Revendications**

1. Méthode pour créer, en imagerie numérique, une bordure autour d'un sujet incrusté sur un fond, ladite méthode comprenant le retardement du signal de découpe ($a_{i,j}$) du sujet au point de l'image situé à l'intersection de la ligne de rang i et de la colonne de rang j de façon à générer une fenêtre de recherche constituée de signaux numériques de découpe du sujet, lesdits signaux numériques de découpe du sujet étant comparés simultanément afin de déterminer une valeur extrême et de constituer, avec cette valeur extrême, un signal de découpe de bordure ($b'_{i-n/2,j-m/2}$), caractérisé en ce que la comparaison est commandée par l'inhibition de certains des signaux numériques de découpe du sujet afin de délimiter une fenêtre d'analyse des signaux numériques de découpe du sujet de dimensions égales ou inférieures à la fenêtre de recherche.

2. Méthode selon la revendication 1, caractérisée en ce que lesdites valeurs prises par le signal de découpe du sujet constituent une fenêtre de recherche rectangulaire comprenant (m+1) X (n +1) points, où m et n sont deux nombres entiers supérieurs ou égaux à 1.

3. Méthode selon la revendication 2, caractérisée en ce que le retardement du signal de découpe ($a_{i,j}$) du sujet est effectué par n circuits à retard (L1, ..., Ln) montés en série, chaque circuit à retard déterminant un retard égal à la durée d'une ligne de balayage de l'image et par (n + 1) X m registres (P01, P0m, ..., Pnm) constitués de n + 1 ensembles de m registres montés en série, chacun des m registres de chacun des n + 1 ensembles déterminant un retard égal à la durée existant entre deux points successifs d'une ligne, lors du balayage de cette ligne.

4. Dispositif pour créer, en imagerie numérique, une bordure autour d'un sujet incrusté sur un fond, ledit dispositif comportant des moyens de retardement (L1, ..., Ln, P01, ..., Pnm) du signal de découpe ($a_{i,j}$) du sujet au point de l'image situé à l'intersection de la ligne de rang i et de la colonne de rang j, de façon à générer une fenêtre de recherche constituée de signaux numériques de découpe du sujet, et des moyens de comparaison (1) pour effectuer une analyse comparative simultanée des valeurs prises par les signaux de découpe du sujet des points situés dans la fenêtre de recherche afin de déterminer une valeur extrême et de constituer, avec cette valeur extrême, un signal de découpe de bordure ($b'_{i-n/2, j-m/2}$), caractérisé en ce que les moyens de comparaison (1) comprennent une entrée de commande (M) pour permettre d'inhiber, au choix, certains des signaux numériques de découpe du sujet afin de délimiter une fenêtre d'analyse des signaux numériques de découpe du sujet de dimensions égales ou inférieurs à la fenêtre de recherche.

5. Dispositif selon la revendication 4, caractérisé en ce que lesdits circuits de retardement sont constitués de n circuits à retard L1, ..., Lk, ..., Ln montés en série de façon que le circuit à retard de rang k soit compris entre les circuits à retard de rangs respectifs k - 1 et k + 1, chaque circuit à retard déterminant un retard égal à la durée d'une ligne de balayage de l'image et de (n + 1) X m registres montés en série P01, ..., POI, ..., POm ; ... ; Pk1 ..., Pkl, ..., Pkm ; ... ; Pn1, ..., Pnl, ..., Pnm ; la sortie du circuit à retard Lk de rang k (k = 1, ..., n) étant reliée à l'entrée du registre Pk1, la sortie du registre P (q - 1) m de rang q - 1 (q = 1, ..., n + 1) étant reliée à une entrée des moyens de comparaison qui lui est propre et l'entrée de chacun des (n + 1) X m registres P01, ..., Pnm étant reliée à une entrée des moyens de comparaison qui lui est propre, chacun des m registres de chacun des n + 1 ensembles déterminant un retard égal à la durée existant entre deux points successifs d'une ligne, lors du balayage de cette ligne.

6. Générateur d'effets spéciaux, caractérisé en ce qu'il comporte un dispositif selon l'une des revendications 4 ou 5.

**Patentansprüche**

1. Verfahren, um bei der digitalen Bildverarbeitung einen Rand um ein Objekt zu erzeugen, das einem Hintergrund überlagert ist, wobei dieses Verfahren das Verzögern des Objekt-Schnittsignals ($a_{i,j}$) an dem Bildpunkt umfaßt, der sich an der Schnittstelle der Zeile mit Rang i und der Spalte mit Rang j befindet, so daß ein Suchfenster erzeugt wird, das aus digitalen Objekt-Schnittsignalen besteht, wobei die digitalen Objekt-Schnittsignale gleichzeitig verglichen werden, um einen Extremwert zu bestimmen und mit diesem Extremwert ein Rand-Schnittsignal ($b_{i-n/2,j-m/2}$) zu erstellen, dadurch gekennzeichnet, daß der Vergleich durch das Blockieren bestimmter dieser digitalen Objekt-Schnittsignale gesteuert wird, um ein Analysefenster aus digitalen Objekt-Schnittsignalen mit Abmessungen, die denen des Suchfensters gleichen oder kleiner sind, einzugrenzen.

2. Verfahren nach Anspruch 1, dadurch gekennzeichnet, das die Werte, die von dem Objekt-Schnittsiganl angenommen werden, ein rechtwinkliges Suchfenster bilden, das (m+1) x (n+1) Punkte umfaßt, wobei m und n zwei ganze Zahlen größer gleich 1 sind.

3. Verfahren nach Anspruch 2, dadurch gekennzeichnet, daß die Verzögerung des Objekt-Schnittsignals ($a_{i,j}$) durch n in Reihe geschaltete Verzögerungschaltungen (L1, .. , Ln), wobei jede Verzögerungschaltung eine Verzögerung bewirkt, die der Dauer einer Abtastzeile des Bildes entspricht, sowie durch (n+1) x m Register (PO1, POm, ..., Pnm) bewerkstelligt wird, die aus n+1 Sätzen von m in Reihe geschalteten Registern bestehen, wobei jedes der m Register der n+1 Sätze eine Verzögerung bewirkt, die der Dauer entspricht, die während der Abtastung einer Zeile zwischen zwei aufeinanderfolgenden Punkten dieser Zeile besteht.

4. Vorrichtung, um bei der digitalen Bildverarbeitung einen Rand um ein Objekt zu erzeugen, das einem Hintergrund überlagert ist, wobei die Vorrichtung Mittel zum Verzögern (L1, ..., Ln, P01 ..., Pnm) des Objekt-Schnittsignals ($a_{i,j}$) an dem Bildpunkt umfaßt, der sich an der Schnittstelle der Zeile mit Rang i und der Spalte mit Rang j befindet, so daß ein Suchfenster erzeugt wird, das aus digitalen Objekt-Schnittsignalen besteht, sowie Vergleichsmittel (1) zur Durchführung einer vergleichenden, simultanen Analyse der Werte, die von den Objekt-Schnittsignalen der Punkte angenommen werden, die innerhalb des Suchfensters liegen, um einen Extremwert zu bestimmen und mit diesem Extremwert ein Rand-Schnittsignal ($b_{i-n/2,j-m/2}$) zu erstellen, dadurch gekennzeichnet, daß die Vergleichsmittel (1) einen Steuereingang (M) aufweisen, der es erlaubt, wahlweise bestimmte digitale Objekt-Schnittsignale zu blokkieren, um ein Analysefenster aus digitalen Objekt-Schnittsignalen mit Abmessungen, die gleich oder kleiner als die des Suchfensters sind, einzugrenzen.

5. Vorrichtung nach Anspruch 4, dadurch gekennzeichnet, daß die Schaltungen zum Verzögern aus n Verzögerungsschaltungen L1, .., Lk ... Ln bestehen, die derart in Reihe geschaltet sind, daß die Verzögerungschaltung vom Rang k zwischen den entsprechenden Verzögerungsschaltungen vom Rang k-1 und k+1 enthalten ist, wobei jede Verzögerungsschaltung eine Verzögerung bewirkt, die der Dauer einer Abtastzeile des Bildes entspricht, sowie aus (n+1) x m in Reihe geschalteten Registern P01, .., P0l, ..., P0m; ...; Pk1, ..., Pkl, ..., Pkm; ...; Pn1, ..., Pnl, ..., Pnm; wobei der Ausgang der Verzögerungschaltung Lk vom Rang k (k= 1, .., n) mit dem Eingang des Registers Pkl verbunden ist, der Ausgang des Registers P(q-1)m vom Rang q-1 (q= 1, ..., n+1) mit einem Eingang der Vergleichsmittel verbunden ist, der nur ihm zugeordnet ist, und der Eingang von jedem der (n+1) x m Register P01, ..., Pnm mit einem Eingang der Vergleichsmittel verbunden ist, der nur ihm zugeordnet ist, wobei jedes der m Register von jedem der n+1 Sätze eine Verzögerung bewirkt, die der Zeitdauer entspricht, die während der Abtastung einer Zeile zwischen zwei aufeinanderfolgenden Punkten dieser Zeile besteht.

6. Generator für Spezialeffekte, dadurch gekennzeichnet, daß er eine Vorrichtung nach Anspruch 4 oder 5 aufweist.

## Claims

1. Method for creating, in digital imaging, a border around an object inlaid into a background, the said method comprising the delaying of the object cutting signal ($a_{i,j}$) at the image point situated at the intersection of row number i and column number j so as to generate a search window consisting of object cutting digital signals, the said object cutting digital signals being compared simultaneously so as to determine an extreme value and to constitute, together with this extreme value, a border cutting signal ($b'_{i-n/2,j-m/2}$), characterized in that the comparison is effected by disabling certain of the object cutting digital signals so as to delimit an object cutting digital signals analysis window of dimensions equal to or less than the search window.

2. Method according to Claim 1, characterized in that the said values taken by the object cutting signal constitute a rectangular search window comprising $(m + 1) \times (n + 1)$ points, where m and n are two integers greater than or equal to 1.

3. Method according to Claim 2, characterized in that the delaying of the object cutting signal ($a_{i,j}$) is performed by n delay circuits (L1, ..., Ln) mounted in series, each delay circuit determining a delay equal to the duration of a scan line of the image and by $(n + 1) \times m$ registers (P01, P0m, ..., Pnm) consisting of n + 1 sets of m registers mounted in series, each of the m registers of each of the n+1 sets determining a delay equal to the duration existing between two successive points of a line, during the scanning of this line.

4. Device for creating, in digital imaging, a border around an object inlaid into a background, the said device including means (L1, ..., Ln, P01, ..., Pnm) for delaying the object cutting signal ($a_{i,j}$) at the image point situated at the intersection of row number i and column number j, so as to generate a search window consisting of object cutting digital signals, and comparison means (1) for performing a simultaneous comparative analysis of the values taken by the object cutting signals for the points situated in the search window so as to determine an extreme value and to constitute, together with this extreme value, a border cutting signal ($b'_{i-n/2,j-m/2}$), characterized in that the comparison means (1) comprise a control input (M) for disabling, by choice, certain of the object cutting digital signals so as to delimit an object cutting digital signals analysis window of dimensions equal to or less than the search window.

5. Device according to Claim 4, characterized in that the said delay circuits consist of n delay circuits L1, .., Lk, ..., Ln mounted in series in such a way that delay circuit number k lies between delay circuits numbers k - 1 and k + 1 respectively, each delay circuit determining a delay equal to the duration of a scan line of the image and of $(n + 1) \times m$ registers mounted in series P01, ..., P0l, ..., P0m; ...; Pk1, ..., Pkl, ..., Pkm; ...; Pn1, ..., Pnl, ..., Pnm; the output of delay circuit Lk number k (k = 1, ..., n) being connected to the input of register Pk1, the output of register P (q - 1) m number q - 1 (q = 1, ..., n + 1) being connected to its own input to the comparison means and the input of each of the $(n + 1) \times m$ registers P01, ..., Pnm being connected to its own input to the comparison means, each of the m registers of each of the n + 1 sets determining a delay equal to the duration existing between two successive points of a line, during the scanning of this line.

6. Special effects generator, characterized in that it includes a device according to one of Claims 4 and 5.

EP 0 504 001 B1

$a_{i,j}$

PILE $L_1$  PILE $L_2$  PILE $L_3$  PILE $L_n$

$a_{i,j}$  $a_{i-1,j}$  $a_{i-2,j}$  $a_{i-n+1,j}$  $a_{i-n,j}$

COMPARATEUR  $n$

$ax/j$  10

REGISTRE $P_1$  REGISTRE $P_2$  REGISTRE $P_3$  REGISTRE $P_m$

$a_{x/j}$  $a_{x/j-1}$  $a_{x/j-2}$  $a_{x/j-m+1}$  $a_{x/j-m}$

CIRCUIT DE REPHASAGE $D$

COMPARATEUR  $m$

11

$a_{i-n/2,\,j-m/2}$  $b_{i-n/2,\,j-m/2}$

FIG.1

FIG.2

EP 0 504 001 B1